# EUROPÄISCHE PATENTSCHRIFT

(11) **EP 0 600 162 B1**
(45) Veröffentlichungstag und Bekanntmachung des Hinweises auf die Patenterteilung: **10.05.2000**
(21) Anmeldenummer: 93113063.7
(22) Anmeldetag: 16.08.1993
(51) Int. Cl.: G01S 5/14

(54) **Verfahren zur Standortbestimmung mittels eines nichtsynchronen zellularen Mobilfunksystem**
Procedure for defining position by means of an asynchronous cellular mobile radio system
Procédé de détermination de position par un système asynchrone de radio mobile cellulaire

(30) Priorität: 04.12.1992 DE 4240578
(43) Veröffentlichungstag der Anmeldung: 08.06.1994
(73) Patentinhaber: DeTeMobil Deutsche Telekom MobilNet GmbH, 53227 Bonn (DE)
(72) Erfinder: Hodde, Andreas, Dipl.-Ing., D-27243 Harpstedt (DE); Mayer, Uwe, Dipl.-Ing., D-51371 Leverkusen (DE); Günther, Bernd, Dipl.-Ing., D-53844 Troisdorf (DE)
(74) Vertreter: Riebling, Peter, Dr.-Ing.

(56) Entgegenhaltungen:
- EP-A- 0 335 558
- WO-A-92/05672
- DE-A- 3 827 352
- GB-A- 2 239 758

## Beschreibung

Die Erfindung betrifft ein Verfahren zur Standortbestimmung von Mobilstationen mittels eines bestehenden nichtsynchronen zellularen Mobilfunknetzes.

Mobilfunknetze dienen bestimmungsgemäß der Übermittlung von Informationen zwischen einem Mobilteilnehmer und dem Telefonfestnetz oder zwischen Mobilteilnehmern untereinander.

Nichtsynchron ist ein zellulares Funknetz dann, wenn es für die Kommunikation eines Mobilgerätes mit dem Netz nicht erforderlich ist, daß die einzelnen Funkfeststationen des Netzes in ihrer Trägerfrequenz und/oder ihrem Modulationssignal einen zeitlich stabilen Bezug zueinandern aufweisen.

Bekannt ist ein nichtsynchrones zellulares Mobilfunknetz beispielsweise aus der Zeitschrift micro elektronik Bd. 5 (1991) Heft 2 S. 62 - 67.

Andererseits ist eine Einrichtung zur Standortbestimmung in einem synchronen Mobilfunknetz aus der EP 0 341 738 bekannt. Dabei ist absolute Netzsynchronität die Voraussetzung, um das von der Einrichtung benutzte Hyperbel-Ortungsverfahren anwenden zu können. Es werden die Datentelegramme mehrerer Funkfeststationen ausgewertet, um über deren Laufzeitdifferenzen eine Information über die Lage der Mobilstation zur Eigenstandortbestimmung zu erhalten.

Dieses Verfahren kann jedoch bei einem nichtsynchronen Mobilfunknetz nicht angewendet werden, da Laufzeitdifferenzen von verschiedenen Funkstationen wegen der nicht vorhandenen Synchronität keine zuverlässige Information darstellen.

Aus der WO-A-92/05672 ist ein Verfahren zur Standortbestimmung von Mobilfunkendgeräten eines aus einer Vielzahl von Funkfeststationen bestehenden, nichtsynchronen zellularen Mobilfunksystems bekannt geworden, wobei das Mobilfunkendgerät kontinuierlich die Kanäle von mindestens drei in der Nähe befindlichen Funkfeststationen abhört und anhand der Signallaufzeiten die Distanz zu den jeweiligen Funkfeststationen mißt und diese Daten an eine Zentrale überträgt. In der Zentrale wird aus den jeweiligen Laufzeiten der Signale zwischen Mobilstation und den Funkfeststationen der Standort der Mobilstation bestimmt.

Der Erfindung liegt deshalb die Aufgabe zugrunde, ein Standortbestimmungsverfahren anzugeben, welches in einem nichtsynchronen zellularen Mobilfunknetz angewendet werden kann und außerdem zur Durchführung des Verfahrens nur geringe Zusatzaufwendungen erfordert.

Diese Aufgabe wird durch die im kennzeichnenden Teil des Patentanspruchs 1 aufgeführten Merkmale gelöst.

Die Erfindung eignet sich besonders zu Zwecken des Flottenmanagements bei Fahrzeugen, die sich auf bekannten Verkehrswegen bewegen, um deren Fahrroute zu verfolgen und um deren Standort zu einem bestimmten Zeitpunkt festzustellen.

Die Vorteile dieses Verfahrens liegen insbesondere darin, daß keine Änderungen innerhalb des nichtsynchronen zellularen Mobilfunktelefonnetzes erforderlich sind. Die benötigten Parameter zur Positionsbestimmung werden dem Mobilfunkendgerät bereits bei dem Funkverbindungsaufbau aus funktechnischen Gründen mitgeteilt. Das Mobilfunkendgerät selbst erfährt nur geringe Änderungen.
Ein weiterer entscheidender Vorteil besteht darin, daß die Standortbestimmungsfunktionalität der Mobilfunkendgeräte von dem jeweiligen Besitzer des Endgerätes durch einen einfachen Bedienvorgang (Betätigung eines Schalters bzw. Eingabe eines Befehls) unterdrückt werden kann, was den Datenschutz gewährleistet und den Besitzer des Endgerätes in die Lage versetzt, selbst zu entscheiden, ob die Bestimmung seines Aufenthaltsortes ermöglicht werden soll. Des weiteren wird der Datenschutz dadurch gewährleistet, daß nur autorisierte Personen die Ortung der Mobilfunkgerätebesitzer durchführen können, da die Ortungs-Authentisierung (Berechtigung zum Orten) in der Zentrale überprüft werden kann.

Ein Ausführungsbeispiel der Erfindung, welches die Anwendung des Verfahrens unter Benutzung eines digitalen zellularen Mobilfunksystems zur Ortung von Mobilfunkteilnehmern beinhaltet, wird im folgenden beschrieben.

Es zeigen
Fig. 1 die grundsätzlichen geometrischen Zusammenhänge bei der Standortbestimmung,
Fig. 2 ein Ausführungsbeispiel für das erfindungsgemäße Verfahren,
Fig. 3 die Erweiterungsmöglichkeit des Verfahrens.

Zellulare Mobilfunknetze zeichnen sich dadurch aus, daß die zu versorgende Fläche in einzelne Zellen unterteilt ist, wobei jede Zelle(1) von einer Funkfeststation(2) versorgt wird. Besteht nun eine Funkverbindung, so werden dem Mobilfunkendgerät(3) bei jedem Verbindungsaufbau und zur Verbindungsaufrechterhaltung die Funkzellenadresse (engl. Cell Identity) und die Signallaufzeit (engl. Timing Advance) zwischen dem Endgerät und der mit ihm in Verbindung stehenden Funkfeststation laufend mitgeteilt.

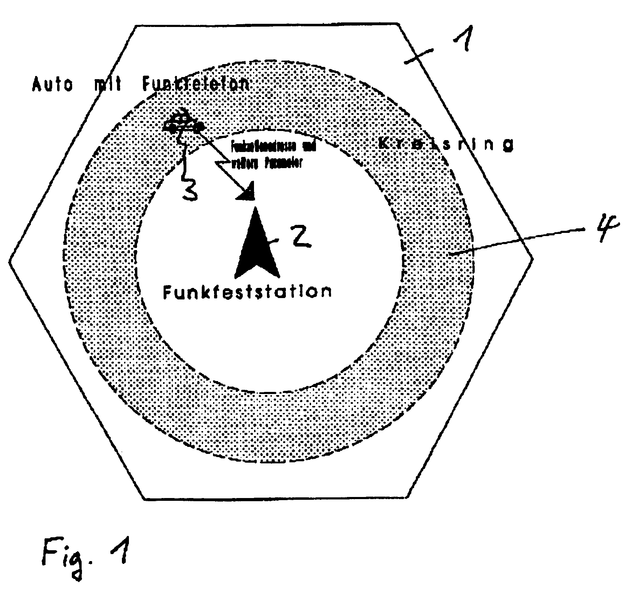

Hierdurch wird die Funkzelle(1), in der sich das Mobilfunkendgerät(3) aufhält, identifiziert. Durch Auswertung eines oder mehrerer zusätzlicher entfernungabhängiger Parameter (z.B. bei asynchronen Funktelefonnetzen mit Zeitschlitzverfahren die entfernungsabhängige Signallaufzeit, die das Mobilfunkendgerät kennen muß), kann ein Kreisring(4) um die Funkfeststation herum ermittelt werden, wie in Fig. 1 angedeutet. Der Kreisring(4) hat einen variablen Radius (abhängig von der Signallaufzeit) und je nach ausgewertetem Systemparameter eine konstante Kreisringbreite (bedingt durch die Fehlerkonstante, die bei digitalen Parametern +/- ½ Bit beträgt).

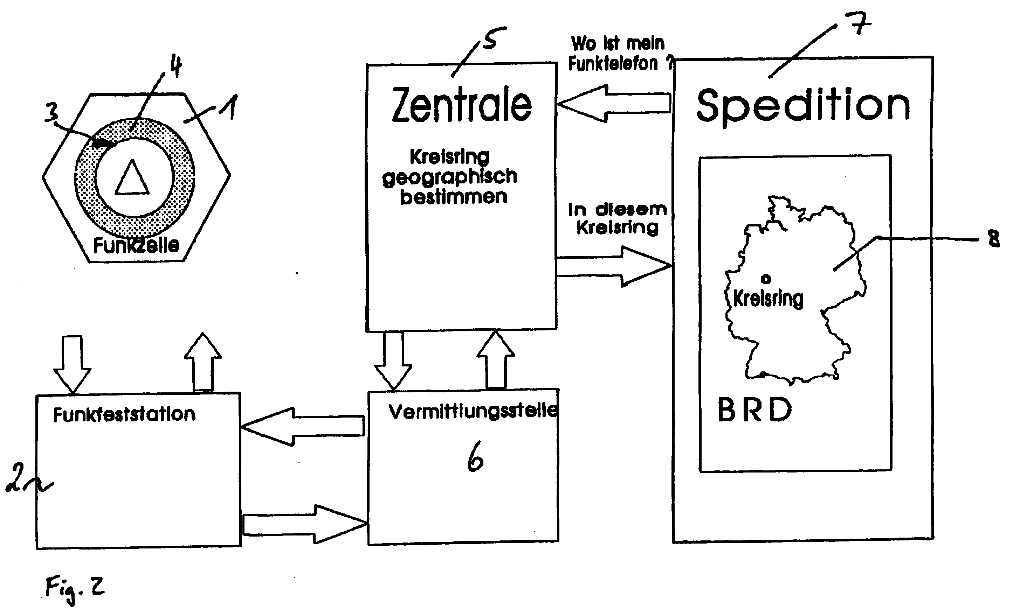

Anhand Fig. 2 werde nun die Durchführung des erfindungsgemäßen Verfahrens erläutert. Dazu wird nun ein Mobilfunkendgerät(3) mit einer Zusatzeinrichtung ausgestattet, die es ermöglicht, daß das Endgerät auf Anfrage einer Zentrale(5) über einen Funkkanal der Funkfeststation(2) und über das angeschlossene Festnetz, hier einfachheitshalber durch eine Vermittlungsstelle(6) dargestellt, dieser Zentrale(5) die Funkzellenadresse und weitere Systemparameter (z.B. die zu dem Zeitpunkt bestehende Signallaufzeit zwischen Mobilfunkendgerät(3) und Funkfeststation(2) und andere Größen mitteilt. Die anfragende Zentrale(5) wertet die Funkzellenadresse aus und bestimmt daraus mit Hilfe einer Datenbank, in der zu jeder Funkzellenadresse der geographische Ort der zugehörigen Funkfeststation gespeichert ist, den Ort der Funkzelle (1). Unter Verwendung der zusätzlichen, entfernungsabhängigen Systemparameter wird dann mittels eines geeigneten Berechnungsalgorithmus der Kreisring(4) bestimmt, in dem sich das Mobilfunkendgerät(3) aufhält.

Auf Anfrage eines Nutzers(7) des Standortbestimmungsverfahrens, hier beispielhaft eine Spedition, gibt die Zentrale(5) die gewünschte Ortsinformation beispielsweise in graphischer Form(8) an ein Datensichtgerät beim Nutzer(7).

Soweit ist eine einfache Anwendung des Erfindungsgedankens dargestellt.

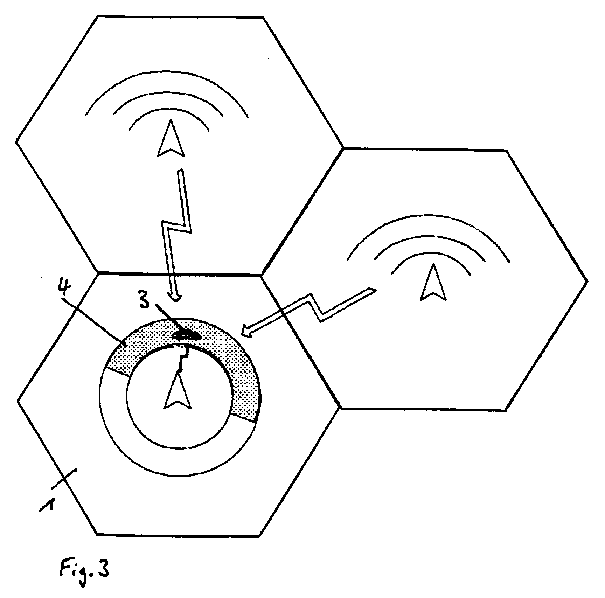

Eine Erweiterung und Verbesserung der Erfindung ist in Fig. 3 skizziert.

So kann in der Zentrale(5) bei einem sich bewegenden Mobilgerät(3) durch Speicherung und Auswertung zeitlich vorheriger Standortdaten des Mobilfunkendgerätes(3) die Ortungsgenauigkeit verbessert werden. Um beispielsweise von einem Kreisring auf ein Kreisringsegment zu schließen, müssen die Daten der vorher kontaktierten Funkzellen in der Zentrale zwischengespeichert und zur Berechnung mit herangezogen werden.

Bei einem sich nicht oder nur langsam bewegenden Mobilfunkendgerät ist noch eine weitere Möglichkeit zur Verbesserung der Genauigkeit denkbar:
Sind am Aufenthaltsort eines Mobilfunkendgerätes mindestens zwei oder weitere Funkfeststationen empfangbar, was bei einem praxisgerechten Mobilfunksystem überwiegend der Fall ist, so kann die Genauigkeit der Standortbestimmung wie folgt verbessert werden.

Eine Steuereinrichtung im Mobilfunknetz veranlaßt das Mobilfunkendgerät, vor einem Umschalten auf eine andere Funkzelle (engl. Handover), die Empfangsqualität von einer oder mehreren empfangbaren Nachbarzellen festzustellen. Dabei werden dem Mobilfunkendgerät Systemparameter der Nachbarzellen mitgeteilt, die in der Regel entfernungsabhängig sind. Für eine genauere Standortbestimmung sind die Funkzellenadressen der empfangbaren Nachbarzellen und die zugehörigen, jeweils ermittelten entfernungsabhängigen Systemparameter der Zentrale mitzuteilen, die daraus von einem Kreisring auf ein Kreisringsegment schließen kann. Die Kombination einer Vielzahl von Ortsinformationen erhöht deutlich die Ortungsgenauigkeit.

Weiterhin läßt sich bei der Standortbestimmung noch folgende Tatsache verwenden:
Da es sich bei den Objekten, deren Standort bestimmt werden soll, in vielen Fällen um Fahrzeuge zu Lande oder zu Wasser handelt, ist es möglich, zur Erhöhung der Genauigkeit zusätzlich die Informationen einer geographischen Karte mit ihren Angaben über den Verlauf von Verkehrswegen (Straßen oder Wasserwegen oder Eisenbahnlinien) hinzuzunehmen. Die Kombination beider Informationen, nämlich derjenigen aus dem Mobilfunksystem und derjenigen aus der Karte, führt zu einer deutlich erhöhten Präzisierung der Bestimmung des Aufenthaltsortes des zu Ortenden.

Das erfindungsgemäße Verfahren enthält noch folgenden Vorteil gegenüber einem konventionellen Ortungsverfahren:
Bei einer üblichen Ortung durch Radar hat der zu Ortende keine Möglichkeit, sich gegen die Ortung zu wehren, da er nur passiv am Ortungsverfahren beteiligt ist. Dabei ist die Ermittlung der Ortskoordinaten nur von der Zentrale aus möglich.

Bei dem erfindungsgemäßen Verfahren mittels des Mobilfunknetzes ist eine Ortung nur möglich, wenn die Person, die geortet werden soll, ein dazu geeignetes Gerät besitzt und mit der Ortung des derzeitigen Aufenthaltsortes auch einverstanden ist.

## Patentansprüche

1. Verfahren zur Standortbestimmung von Mobilfunkendgeräten eines aus einer Vielzahl von Funkfeststationen bestehenden, nichtsynchronen zellularen digitalen Mobilfunksystems, wobei jedem Mobilfunkendgerät bei einem Verbindungsaufbau und zur Verbindungsaufrechterhaltung mit einer Funkfeststation die der Funkfeststation zugeordnete Funkzellenadresse und die Signallaufzeit zwischen dem Mobilfunkendgerät und der Funkfeststation mitgeteilt wird, **dadurch gekennzeichnet**, daß eine Zentrale (5) vorgesehen ist, die über eine Vermittlungsstelle (6) mit den Feststationen (2) des Mobilfunksystems in Verbindung steht, und das Mobilfunkendgerät (3) auf Anfrage der Zentrale (5) über das Mobilfunksystem und die Vermittlungsstelle (6) die Funkzellenadresse und die augenblickliche Signallaufzeit an die Zentrale übermittelt, welche daraus die geographischen Ortsdaten der zugehörigen Funkzelle (1) und eine Kreisringzone (4) innerhalb dieser Funkzelle (1) bestimmt, in welcher sich das Mobilfunkendgerät aufhält, wobei in der Zentrale (5) Angaben über den Verlauf von Verkehrswegen abgelegt sind, und durch Kombination des Verkehrswegeverlaufs und der ermittelten Ortsdaten eine weitere Verbesserung der Ortungsgenauigkeit erzielt wird, wobei die Funktionalität des Mobilfunkendgerätes zur Standortbestimmung von dem jeweiligen Benutzer abgeschaltet werden kann.

2. Verfahren gemäß Anspruch 1, **dadurch gekennzeichnet**, daß die Berechtigung zur Standortbestimmung in der Zentrale überprüft werden kann.

3. Verfahren gemäß einem der vorgenannten Ansprüche, **dadurch gekennzeichnet**, daß zur Bestimmung der Kreisringzone ein Berechnungsalgorithmus angewendet wird.

4. Verfahren gemäß einem der vorgenannten Ansprüche, **dadurch gekennzeichnet**, daß bei Empfang von Nachbarfeststationen der Funkzelle, in der sich das Mobilfunkendgerät aufhält, durch Auswertung der Nachbarzellenadressen und ihrer entfernungsabhängigen Systemparameter die Bestimmung des Aufenthaltsorts des Mobilfunkendgeräts bis auf ein Kreissegment verbessert werden kann.

## Claims

1. Method for position finding of mobile radio terminals in a non-synchronous cellular digital mobile radio system comprising a large number of fixed radio stations, in which case, when a connection is set up and in order to maintain the connection to a fixed radio station, each mobile radio terminal is told the radio cell address associated with the fixed radio station and the signal propagation time between the mobile radio terminal and the fixed radio station, characterized in that a control centre (5) is provided, which is connected via a switching centre (6) to the fixed stations (2) in the mobile radio system, and which mobile radio terminal (3) transmits the radio cell address and the instantaneous signal propagation time to the control centre, on request from the control centre (5), via the mobile radio system and the switching centre (6), which control centre uses this information to determine the geographical location data of the associated radio cell (1) and an annular zone (4) within this radio cell (1) in which the mobile radio terminal is located, in which case details relating to the profile of traffic movements are stored in the control centre (5) and a further improvement in the position-finding accuracy is achieved by combination of the traffic movement profile and the determined location data, and in which case the functionality of the mobile radio terminal for position finding can be switched off by the respective user.

2. Method according to Claim 1, characterized in that the authorization for position finding can be checked in the control centre.

3. Method according to one of the preceding claims, characterized in that a calculation algorithm is used to determine the annular zone.

4. Method according to one of the preceding claims, characterized in that, in the event of reception from adjacent fixed stations in the radio cell in which the mobile radio terminal is located, the determination of the location of the mobile radio terminal can be improved down to a circle segment by evaluation of the adjacent cell addresses and their distance-dependent system parameters.

## Revendications

1. Procédé pour repérer la position d'appareils terminaux radiotéléphoniques mobiles d'un système radiotéléphonique mobile non synchrone, cellulaire, numérique constitué par une multitude de stations radiotéléphoniques fixes, à chaque appareil terminal mobile étant communiqué, lors de l'établissement d'une liaison et pour maintenir la liaison avec une station radiotéléphonique fixe, l'adresse de cellule associée à la station radiotéléphonique fixe et la durée de parcours du signal entre l'appareil terminal mobile et la station radiotéléphonique fixe, caractérisé en ce qu'il est prévu un central (5) qui est en communication, via un poste médiateur (6), avec les stations fixes (2) du système radiotéléphonique mobile, et en ce que l'appareil terminal mobile (3) communique au central, à la demande du central (5), l'adresse de cellule et la durée de parcours de signal momentanée via le système radiotéléphonique mobile et via le poste médiateur (6), et ledit central détermine à partir de ces informations les données locales géographiques de la cellule associée (1) et détermine à l'intérieur de cette cellule (1) une zone circulaire annulaire (4) dans laquelle se trouve l'appareil terminal mobile, des indications sur le tracé des voies de circulation étant mémorisées dans le central (5), et en combinant le tracé de voies de circulation et les données locales détectées, on obtient une nouvelle amélioration de la précision de repérage, la fonctionnalité de l'appareil terminal mobile pour repérer la position pouvant être désactivée par l'utilisateur respectif.

2. Procédé selon la revendication 1, caractérisé en ce que l'on peut vérifier dans le central l'autorisation de repérage de position.

3. Procédé selon l'une des revendications précédentes, caractérisé en ce que l'on applique un algorithme de calcul pour déterminer la zone circulaire annulaire.

4. Procédé selon l'une des revendications précédentes, caractérisé en ce que lors de la réception de stations fixes voisines de la cellule radiotéléphonique dans laquelle se trouve l'appareil terminal mobile, on peut améliorer le repérage du lieu de séjour de l'appareil terminal mobile jusqu'à un segment de cercle par évaluation des adresses de cellules voisines et de leurs paramètres de systèmes dépendants de la distance.
